# EUROPEAN PATENT APPLICATION

(11) **EP 4 546 807 A1**
(43) Date of publication of application: **30.04.2025**
(21) Application number: 23829852.5
(22) Date of filing: 02.06.2023
(51) Int. Cl.: H04N 23/60, B60R 1/06

(54) **CAMERA SYSTEM FOR NON-DIRECTLY-FACING SHOOTING AND CAMERA SYSTEM CONFIGURATION METHOD**

(30) Priority: 26.06.2022 CN 202210732008
(71) Applicant: Shanghai Kem Vision Technology Co., Shanghai 201702 (CN)
(72) Inventor: FU, Bingkai, Shanghai 201702 (CN)
(74) Representative: Franke, Dirk
(86) International application number: PCT/CN2023/098062
(87) International publication number: WO 2024/001667

(57) **Abstract**

Disclosed in the present invention are a camera system for non-directly-facing shooting and a camera system configuration method. The camera system comprises a camera body, an image acquisition unit and an imaging lens. The imaging lens and the image acquisition unit are respectively installed at the front end and the rear end of the camera body. The camera body inclines, with respect to a reference direction, at a first angle *θ* in a first direction; the imaging lens and the image acquisition unit incline, with respect to the main axis of the camera body, at a second angle *α* and a third angle *β* respectively in the direction opposite to the inclination direction of the camera body, the second angle *α* and the third angle *β* being different from each other. The present invention can shoot clearly without perspective distortion scenes in a larger range of depth of field at sides of or below an object, thereby providing a better field of view for people.

## Description

### Related Application

The present application claims the priority of Chinese patent application No. 202210732008.1 filed on June 26, 2022 and entitled "Camera System for Non-Directly-Facing Shooting and Camera System Configuration Method".

### Field of the Invention

The present invention relates to the field of image capturing, and in particular to a camera system with larger depth of field, no perspective distortion, and high definition.

### Background

When shooting to capture images, according to a conventional shooting method, a camera directly faces a region to be shot, and a focal plane, an object plane and an image plane of the camera are parallel to each other. Such shooting method is known as "directly-facing shooting". However, in some specific application scenes, such "directly-facing shooting" cannot create the best shooting and application effects. For example, when shooting in a plaza, a station or shooting by a vehicle-mounted camera system, adopting such directly-facing shooting manner, there will be serious perspective distortion, and thus the shooting effect is undesirable.

For example, for a vehicle-mounted camera system, with the development of electronic camera technology, more and more vehicle rear-view mirrors are added with an auxiliary camera device, and a scene shot by a camera is displayed to a driver through a screen via a rear-installed camera or other cameras so as to improve the field of view observed by the driver and the definition of the field of view.

A focusing method of optical-based photography equipment determines its limited range of depth of field, and the sum of front depth of field and rear depth of field cannot meet the requirements of large range of depth of field of a vehicle-mounted electronic rear-view mirror. Insufficient depth of field will lead to uneven distribution of image definition and local image blurring, inducing that the image definition of electronic rear-view mirror has a huge gap with the reflection imaging definition of a glass reflector.

In addition, the existing vehicle-mounted rear-view camera system is designed such that an optical axis of the lens and the center of the photosensitive image plane are coaxial, and the focal plane and the image plane are parallel. Although such design can ensure that the object plane at the rear of vehicle can form a clear image on the image acquisition unit, the position which part of the formed image is clearest must be located at the center position of the image, i.e., in designing the lens for the existing vehicle-mounted rear-view camera system, it is inevitable that the image quality at the center is excellent but the image quality at the edge is relatively poor. In fact, during travel of a vehicle, the area most concerned by a driver for the glass rear-view mirror (electronic display) is not the center position, but at a position higher than the center point, at a height of 60-80% of the glass rear-view mirror (electronic display), and is close to the vehicle body side position. The existing camera system technology has not solved this problem yet.

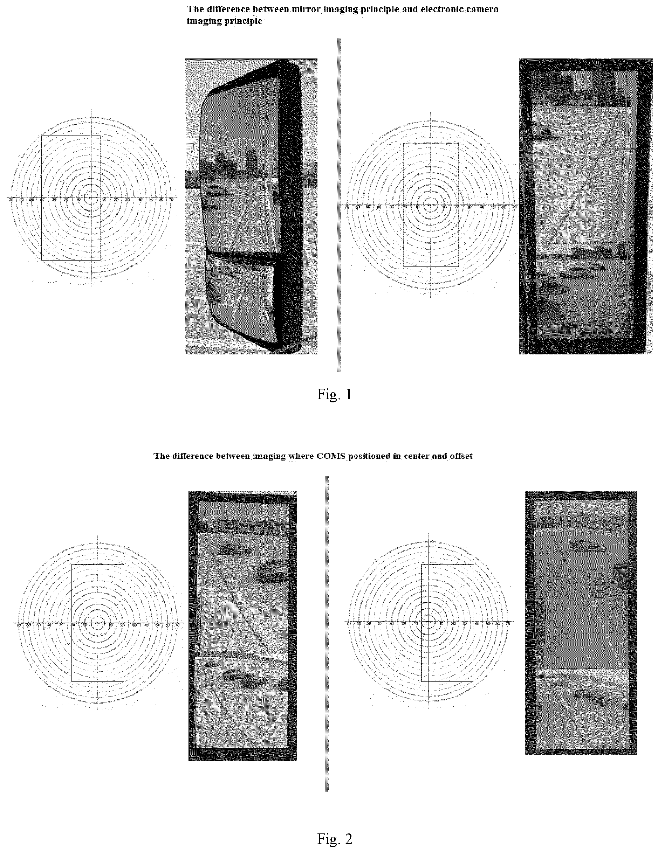

As shown in FIG. 1, the image shot by the camera lens is an image shot by circular, wide-angle lens, and the distortion generated by which is barrel-type distortion. In order to keep the distortion caused by the imaging distortion of the electronic camera consistent with the distortion caused by the glass reflector, the image must be subjected to software correction. In FIG. 1, the imaging principle of the glass reflector is shown on the left, while the imaging principle of the electronic camera is shown on the right.

In practical installation, when the camera is placed downwards and outwards, it would cause too much perspective distortion, and excessive software correction, then pixels will be lost, resulting in a decrease of image resolution. As shown in FIG. 2, an imaging result obtained by a shooting method with the image acquisition unit being centered is shown on the left, and an imaging result obtained by an acquisition method with the image acquisition unit being offset is shown on the right of FIG. 2.

There is almost no perspective distortion in the reflection imaging of conventional glass rear-view mirror, only associates with eye point position which affects the range of observation. However, the perspective distortion of electronic camera imaging is affected by a position of installation. In using, the perspective distortion must be subjected to software correction, however, it will bring about variation of magnification factor.

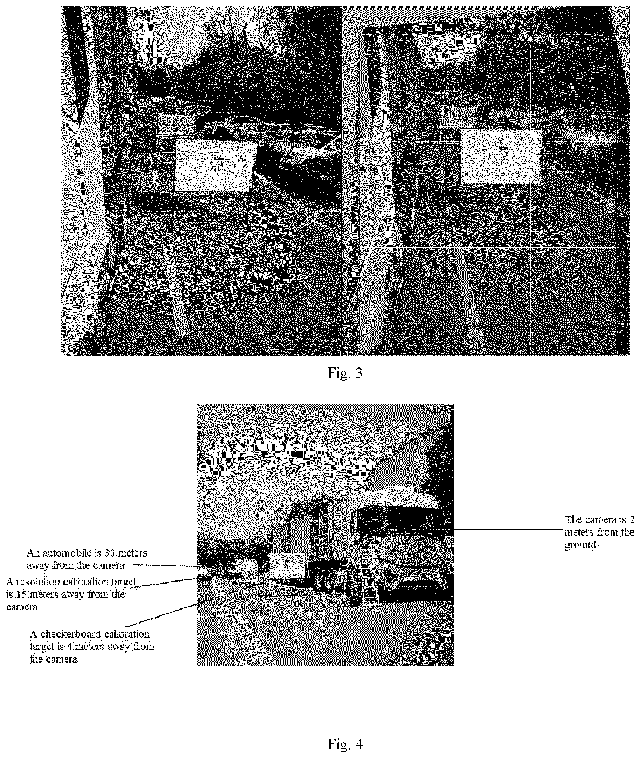

In order to maintain sharpness and definition of a vehicle body side in a displayed picture, when the picure is obtained, skyline should be in an area at a height of 60-80% of the whole image in perpendicular direction, an optical axis of the camera lens must be parallel to a central axis of the vehicle, and the camera should be installed to be inclined to the ground. As such, half of the image acquired by the camera will be blocked by the vehicle body and wasted, which cannot make efficient use of the effective picture pixels acquired by the camera. Inclination of the camera toward outside of the vehicle body will bring horizontal convergence perspective distortion of the image, and inclination of the camera downward will bring vertical convergence perspective distortion. At present, there presents the two manners of inclination installation, during the process of installation and use. The two kinds of perspective distortions of the image acquired by the camera will be interlaced and highlighted, and the image must be trimmed and subjected to software correction during post processing. A huge amount of software coding and chip computility will lead to a large increase in the overall cost, and will lead to seriously pixel loss, reducing the observation field angle and affect the image quality. As shown in FIG. 3, there is a comparison of images before and after correction performed by using software in the prior art, and approximately 40% of the image quality will be lost after correction, so the existing camera system has not solved the problem yet.

### Summary

In view of the above, the present invention seeks to provide a camera system with a large depth of field, a large range of clear imaging and which solves the problem of perspective distortion. In addition, when it is applied to the vehicle-mounted rear-view system, it is possible to achieve clearer shooting of a position near a skyline where the sky and the ground are at junction.

Specifically, the present invention provides a camera system for non-directly-facing shooting, where the camera system includes a camera body, an image acquisition unit and an imaging lens, a front end of the camera body is/includes a camera lens barrel, the imaging lens is installed in the camera lens barrel, the image acquisition unit is installed at the rear end of the camera body, and the camera lens barrel inclines, with respect to a reference direction, at a first angle *θ* in a first direction, the imaging lens incline, with respect to a main axis of the camera lens barrel, at a second angle *α* in the direction opposite to the inclination direction of the camera lens barrel, and the image acquisition unit incline, with respect to a main axis of the camera lens barrel, at a third angle *β* in the direction opposite to the inclination direction of the camera lens barrel.

Preferably, the second angle *α* and the third angle *β* are different from each other.

Preferably, the third angle *β* is greater than the second angle *α*, such that a plane where the image acquisition unit is located and a plane where the imaging lens is located intersect to form one acute angle on one side of the inclination direction of the camera lens barrel.

Preferably, the imaging lens horizontally translates or offsets, with respect to the main axis of the camera lens barrel, in the second direction, or the image acquisition unit horizontally translates or offsets, with respect to the main axis of the camera lens barrel, in an opposite direction of the second direction, the second direction is perpendicular to the first direction and the main axis of the camera lens barrel and toward a shot object, and the image acquisition unit and the imaging lens deflect at an angle *γ* in the second direction.

Preferably, the first angle *θ* is 6-14 degrees, the second angle *α* is 6-14 degrees and the third angle *β* is 8-17 degrees.

Preferably, the camera system is a vehicle-mounted camera system to be installed in a target vehicle, the camera system is installed on a side of the target vehicle, the first direction is a vertically downward direction, and the second direction is the direction away from the body of the target vehicle.

Preferably, the camera system includes a plurality of sets of imaging structures composed of an image acquisition unit, an imaging lens and a camera body, which are respectively installed on two sides of a vehicle.

Preferably, the camera system is installed higher than a target region to be shot.

Preferably, an object focal point of the imaging lens is located at the rear of a side of the target vehicle, and a plane where the object focal point is located intersects with an intersection line, which is the intersection line of (1) a plane where the image acquisition unit is located and (2) a plane where the the imaging lens are located, to form an object focal plane S, where the third angle *β* and the second angle *α* satisfy a relationship of arctan (β-α) = f/(H-h), where H is a height of a center of imaging lens from the ground, f is a focal length of the imaging lens, and h is a preset height of the object focal plane S from the ground.

In another aspect, the present invention provides a structure configuration method for a camera system including a camera body, an image acquisition unit and an imaging lens, where a front end of the camera body is a camera lens barrel, and the method includes:
the imaging lens is installed in the camera lens barrel, the image acquisition unit is installed at the rear end of the camera body, the camera system is installed such that the main axis of the camera lens barrel inclines, with respect to a reference direction, at a first angle *θ*; the imaging lens is set to incline, with respect to the main axis of the camera lens barrel, at a second angle *α* in the direction opposite to the inclination direction of the main axis of the camera lens, the image acquisition unit is set to incline, with respect to the main axis of the camera lens barrel, at a third angle *β* in the direction opposite to the inclination direction of the main axis of the camera lens, the second angle *α* and the third angle *β* being different from each other.

Preferably, the third angle *β* is larger than the second angle *α*, such that a plane where the image acquisition unit is located and a plane where the imaging lens is located intersect to form one acute angle.

Preferably, the image acquisition unit horizontally offsets, with respect to a main axis of the camera lens barrel, in the second direction, the second direction is perpendicular to the first direction and the main axis of the camera lens barrel, the image acquisition unit and the imaging lens deflect at an angle toward the third direction, and the third direction is opposite to the second direction.

Preferably, the first angle *θ* is 6-14 degrees, the second angle *α* is 6-14 degrees and the third angle *β* is 8-17 degrees.

Preferably, the first angle *θ* may be 7, 8, 9, 10, 11, 12, and 13 degrees, the second angle *α* may be 7, 8, 9, 10, 11, 12, and 13 degrees, and the third angle *β* may be 8, 9, 10, 11, 12, 13, 14, 15, and 16 degrees.

It should be noted that "non-directly-facing shooting" mentioned in the present invention refers to oblique/inclining shooting, i.e., a condition where the target region to be shot cannot be parallel to an image plane of the image sensor. For example, when shooting down from a position above a plaza, the target region to be shot covers the whole plaza as large as possible, and if "directly-facing shooting" is kept, perpendicular shooting down from above is required, a camera with an extremely wide angle is required and the height requirement of the camera is very high, which is difficult to realize, and therefore, only a method of shooting inclined downward can be adopted.

When the camera is inclined downward, the plane of an image acquisition apparatus (COMS) is parallel to a focal plane of the imaging lens; since a person (object plane) in the plaza is vertical but not parallel to the image plane and focal plane formed by the image acquisition apparatus, the head and the feet are not in a focal plane, there is a difference in definition, the person in the image is subjected to perspective distortion, and there will be a proportion distortion between the width of the head and directly-facing shooting.

If using the technology of the present invention, the image plane and the focal plane of the image acquisition apparatus are leaned backward at the same time, and are adjusted so that the image plane, the focal plane and the object plane to intersect in a line through the installation height calculation, so as to realize consistency of the definition of the head and the feet, and the head of the person is not subjected to perspective distortion.

The "reference direction" mentioned in the present invention may be set according to the shooting requirements, for example, for the above-mentioned shooting inclined downward, the reference direction may be a horizontal direction, while for shooting a side upward, the reference direction may be a vertical direction. In a vehicle-mounted image capturing scene, the reference direction is selected as the horizontal backward direction.

The "first direction" mentioned in the present invention refers to the direction having more targeted shot photographic fields, on one side of the reference direction, and in a vehicle-mounted image capturing scene, the first direction is a vertical direction, in particular a vertically downward direction.

The "second direction" mentioned in the present invention refers to a direction which is substantially perpendicular to the first direction and the direction of the main axis of the camera lens barrel and is directed to a area including more target shot photographic fields, and in the vehicle-mounted image capturing scene, the second direction is a direction which is substantially horizontal, towards the outside of the vehicle body and away from the vehicle body.

It should be noted that the second angle may be 0 and the third angle is not 0.

When the camera system of the present invention is applied to a vehicle-mounted camera system, the camera system can be divided into a left one and a right one, and is arranged on two sides of the vehicle in an axisymmetric manner with respect to each other; in addition, the positional relationship of the camera lens barrel, the image acquisition unit and the imaging lens mentioned in the present invention can be solidified by being fixed in the camera system or can be installed in the camera system in an adjustable installation manner. The "inclined downward" mentioned for the vehicle-mounted camera system is inclined downward with respect to the horizontal direction see from a view of the camera. The "away from" the vehicle body direction refers to rotational inclination to the outside with respect to a side wall of a passenger compartment of the vehicle body from the view of a camera so as to shoot less of the vehicle body but more of the photographic field at the rear.

### Technical effects

The camera system of the present invention can provide clearer, large depth of field, no perspective distortion images over a wider range. This camera can be used in stations, plazas, wharfs, ships and other places where installation height, large depth of field and no perspective distortion are required.

The "deflection" of the angle in the camera system of the present invention refers to a rotation angle of the imaging lens and the image acquisition unit (sensor) with respect to an installed main axis thereof. According to the present invention, by configuring that: the imaging lens and image acquisition unit to both incline, with respect to the main axis of the camera lens barrel, at a second angle *α* and a third angle *β* respectively in the direction opposite to the inclination direction of the reference direction of the main axis of the camera lens, the second angle *α* and the third angle *β* are different from each other, so that they together form an included angle, and an intersection line of the two is below the height of imaging lens and the image acquisition unit, and intersects with a plane passing through an object focal point, generally satisfying Scheimp's law (Theodor Scheimpflu). Thus, a clear image can be formed in an area before and after the plane passing through the object focal point. The "translation" in the camera system of the present invention refers to moving of the lens center and the sensor center with respect to the installed main axis of the camera lens barrel, with a core purpose of achieving a relative positional offset between the lens optical axis center and the sensor center. According to the solution of the present invention, the camera system can be adjusted for adaption in use according to different application scenes, camera installation heights, field of view of regulatory requirement, etc.

In summary, in the present invention, by inclining a shooting angle below a horizontal line, together with a reverse inclination of the image acquisition unit and the imaging lens which adot different inclination angles, the object plane and the image acquisition unit and the imaging lens satisfy Scheimp's law, additionally, cooperating with the translation of the camera lens and the rotation of the camera lens and the image acquisition unit, the present invention not only widens the depth of field, expands the clear field of view, but also avoids perspective distortion.

In addition, when the present invention is used as a vehicle-mounted camera system, it is possible to make the image that far away behind the vehicle clearer, which is more important to the driver, so as to provide better driving safety.

### Brief Desription of Drawings

FIG. 1 is a view showing a comparison of differences between an imaging principle of a glass reflector and an imaging principle of an electronic camera;
FIG. 2 is a schematic diagram showing a comparison between imaging results obtained from a shooting manner in which an image acquisition unit is centered and an image acquisition manner in which the image acquisition unit is offset;
FIG. 3 shows a comparison of images before and after software correction in the prior art;
FIG. 4 is an actual photography of a shooting scene where a device of the present invention is applied to vehicle-mounted image capturing;
FIG. 5 is a schematic diagram showing evolution of inclination arrangements of various parts of a camera in a camera system, where pictures A-C are schematic side views and pictures D and E are schematic top views;
FIG. 6 is a schematic side view showing an angular relationship among an imaging lens 100, an image acquisition unit 200, and a camera lens barrel when shooting inclined downward;
FIG. 7 is a schematic top view showing an angle and displacement offset relationship of an imaging lens 100 with respect to a main axis of a camera lens barrel when shooting inclined downward;
FIG. 8 is an image shot when an optical axis of a camera is parallel to a central axis (longitudinal) of a vehicle body and an imaging lens 100 is arranged parallel to an image acquisition unit 200, i.e., a comparison image shot by using the shooting manner in picture A (left picture) of FIG. 3;
FIG. 9 is an image shot when a camera is slightly inclined downward and inclined to the outside of a vehicle body, but an imaging lens 100 is arranged parallel to an image acquisition unit 200, i.e., a comparison image shot by using the shooting method in picture B (right picture) of FIG. 3; and
FIG. 10 is an image shot in such a condition that a camera lens barrel inclined downward to the rear of a vehicle when a camera apparatus is installed on the vehicle, and an imaging lens 100 and an image acquisition unit 200 are both inclined at different angles in a reverse direction with respect to a main axis of the camera lens barrel (central axis of a camera lens barrel).

### Detailed Description of Embodiments

Hereinafter, the present invention will be described in further detail with reference to examples and drawings, but the embodiments of the present invention are not limited thereto.

FIG. 4 shows actual photography of shooting scenes in each embodiment and comparative example of the present invention, images in the embodiment and comparative example are shot in this scene, and these examples are described by taking a vehicle-mounting scene as an example. It should be noted that although the following embodiments and comparative examples are described taking vehicle-mounted image capturing as an example, the present invention is not limited to a vehicle-mounted camera system, but may be applied to various scenes requiring shooting in inclination such as a station, a plaza, a mall, a highway, etc.

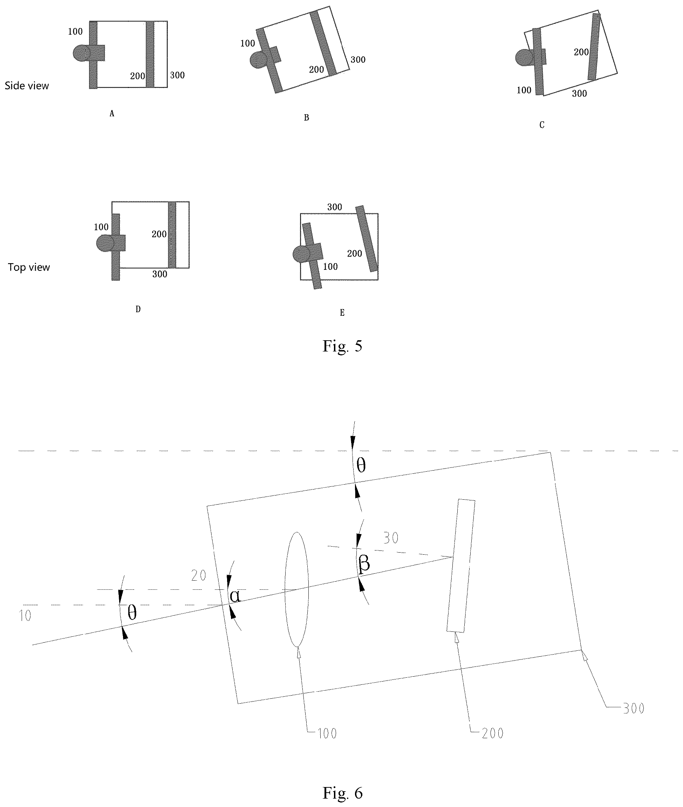

FIG. 5 is a schematic diagram showing evolution of an inclination arrangement of various parts of a camera in a camera system according to the present embodiment. First, pictures A and B of FIG. 5 show an arrangement of an ordinary camera, and pictures C-E of FIG. 5 show an arrangement of Embodiment 1 of the present invention. In each figure, an imaging lens (or referred to as a front focal structure) 100 is on the left, and an image acquisition unit (or referred to as a rear focal structure) 200 is on the right, and both are installed in a camera body 300 (including a lens barrel 301 and an acquisition cavity 302); the imaging lens 100 is installed at a front end of the camera body 300, in the camera lens barrel, the image acquisition unit 200 is installed at the rear end of the camera body 300.

### Comparative Example 1

A camera apparatus in picture A of FIG. 5 shoots directly at the rear of a vehicle when installed on the vehicle, and an imaging lens 100 is provided in parallel with an image acquisition unit 200. An image acquisition apparatus in picture B of FIG. 5 shoots inclined backward and downward when installed on the vehicle, and an imaging lens 100 is set in parallel with an image acquisition unit 200.

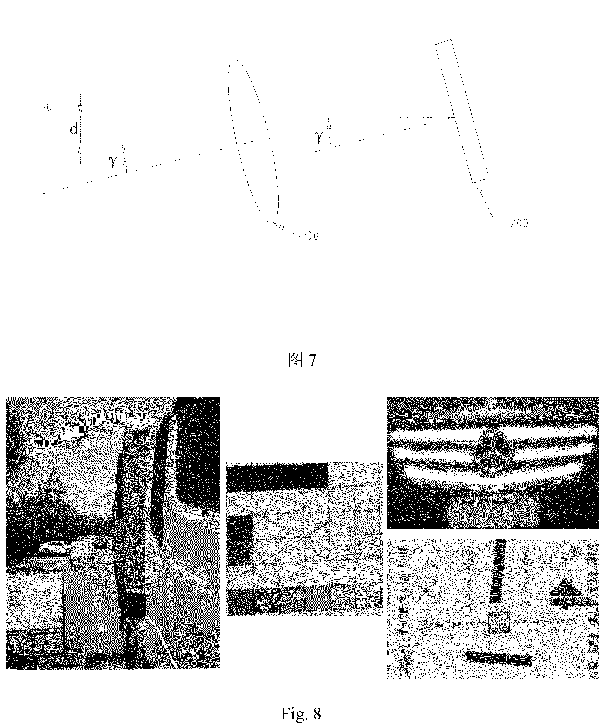

The image shot by the shooting manner of picture A of FIG. 5 is as shown in FIG. 8, an overall view of the image shot is on the left, an enlarged view of a checkerboard calibration target at the front of the overall view is in the middle, and enlarged views of a black car and a resolution calibration target at the rear of the overall view are respectively on the right. It is obvious from the figure that the shape of a patten in the resolution calibration target is obviously distorted, what is on the left of the checkerboard is larger than that on the right, and the checkers in the figure are no longer standard ones. **In** this figure, the vehicle body is blocked by half, a horizon is in the middle of the image, the field of view in front of the vehicle is incomplete, and the field of view on the outside of the vehicle body does not meet regulatory requirement.

### Comparative Example 2

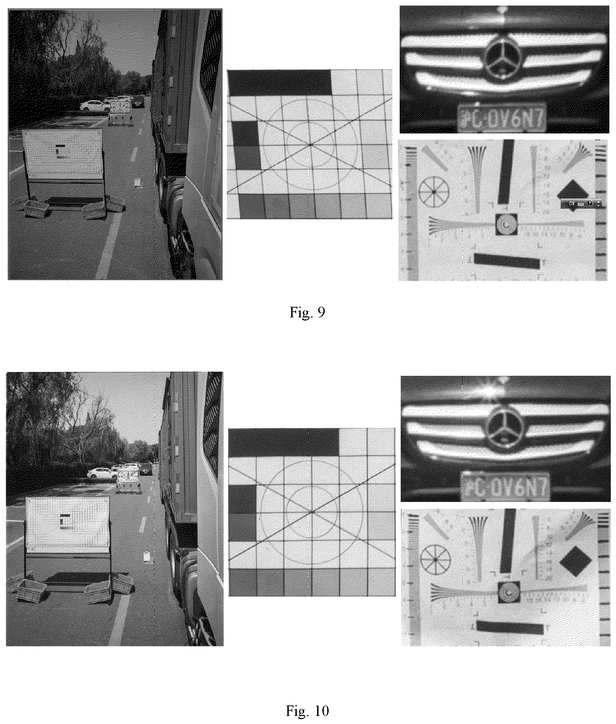

According to the camera arrangement in picture B of FIG. 5, i.e., the camera is slightly inclined downward by about 10 degrees, and furthermore, in order to reduce the proportion of the vehicle body in the image, the camera is inclined outward of the vehicle body by about 10 degrees, and the image shot is as shown in FIG. 9. In the figure, an overall view of the image shot is on the left, an enlarged view of a checkerboard calibration target which is at front of the overall view is in the middle, and enlarged views of a black car and a resolution calibration target at the rear of the overall view are respectively on the right. The shot views below are all arranged as such, which are not described in detail subsequently. It can be seen from the figure that when the camera is inclined downward and inclined to the outside of the vehicle body, more serious perspective distortion occurs, the lines on the resolution calibration target in the front and the checkerboard calibration target in the rear are obviously inclined, and the checkers are seriously distorted.

### Embodiment

In FIG. 5, pictures C-E show a shooting arrangement of the embodiments of the present invention, where picture C is a schematic side view, and pictures D and E are schematic top views (in each view, a change in dimension of components seen in other directions due to rotation or deflection is not shown, and the figures are only for illustrating deflection and translation in two directions). In the present embodiment, as shown in FIG. 6, when an camera apparatus is installed on the vehicle, an image is shot to the rear of a vehicle while the camera is inclined downward, i.e., a main axis of a camera body, with respect to a horizontal direction, is inclined downward at a first angle *θ*, and the vertically downward direction will be referred to herein as the first direction. A horizontal line is denoted by number 10 in FIG. 6 as the "reference direction" of the present embodiment. The imaging lens 100 and the image acquisition unit 200 are oppositely inclined with respect to the main axis of the camera lens barrel (a central axis of the lens barrel), i.e., forming an included angle with the main axis in a clockwise direction with respect to the main axis of the camera, respectively. The imaging lens 100 and the image acquisition unit 200 (or a normal direction of the two) incline, with respect to the main axis of the camera lens barrel, in the direction opposite to the inclination direction of the main axis of the camera lens barrel with respect to the horizontal direction, the inclination angles being respectively a second angle *α* and a third angle *β*, 10 denotes the horizontal direction (the "reference direction" in the present embodiment), and 20 and 30 denote the normal lines of the imaging lens 100 and the image acquisition unit 200, respectively. Preferably, the third angle *β* at which the image acquisition unit 200 is inclined is larger than the second angle *α* at which the imaging lens 100 is inclined, and the second angle *α* and the third angle *β* are different.

Preferably, an object focal point of the imaging lens is located at the rear of a side of the target vehicle, and a plane where the object focal point is located intersects with to form an object focal plane S, the intersection line is a line at which a plane where the image acquisition unit is located and a plane where the imaging lens is located intersect with each other, wherein the third angle *β* and the second angle *α* satisfy a relationship of arctan (β-α) = f/(H-h), where H is a height of an imaging lens center from the ground, f is a focal length of the imaging lens, and h is a preset height of the object focal plane S from the ground. In this way, the camera satisfies Scheimp's law when imaging, so that a clear image can be formed in an area before and after a plane passing through the object focal point.

Preferably, as shown in the top views of pictures D and E of FIG. 5, the imaging lens 100 is offset (translated) with respect to the main axis of the camera lens barrel by an offset distance d, and the offset distance is substantially equal to tan8° to tan15° multiplied by a distance L between the imaging lens 100 and the image acquisition unit 200, i.e., with the center of the image acquisition unit as a reference, the imaging lens center is offset by a distance corresponding to approximately 8-15 degrees with respect to the main axis of the camera. The offset direction is a direction away from the vehicle body (such offset can also be achieved by the image acquisition unit 200 translating with respect to the main axis of the camera lens barrel towards the vehicle body direction), and at the same time, both the imaging lens 100 and the image acquisition unit 200 rotate with respect to the vertical direction center line thereof, and the rotation direction is in a direction away from the vehicle body (it would be understood by a person skilled in the art that if in other scenes, the vehicle body can be replaced by a side wall of a building, a roadside of an expressway, etc.). More specifically, as shown in FIG. 7, since the camera shoots towards the rear of the vehicle body, the imaging lens 100 and the image acquisition unit 200 are each rotated to the outside of the rear of the vehicle by an angle *γ*, preferably from 8 to 16 degrees, about the central axis of each in the vertical direction, and more preferably, the angle *γ* is positively correlated with the distance by which the imaging lens 100 is offset with respect to the main axis of the camera lens barrel. Preferably, the rotation angles of the imaging lens 100 and the image acquisition unit 200 are the same as each other, but it is not excluded that their rotation angles are slightly different from each other.

It can be seen from FIG. 10 that with the arrangement in the embodiment of the present invention, (1) the size of the vehicle body in the image shot meets the design requirements, and the proportion of the vehicle body is relatively small; (2) a horizon is located at the middle and upper part of a screen, which meets the design requirements and is more conducive to the observation of the driver, the driver can clearly see the road conditions behind the vehicle and vehicle conditions related to the current vehicle, and the field of view in front of the vehicle meets the design requirements; (3) the field of view outside of the vehicle body is more sufficient, and it is more important that (4) the perspective distortion of the checkerboard is effectively corrected in the image of the checkerboard calibration target, and (5) the image within the range of depth of field of from 4 to 30 meters required by the relevant laws and regulations on road traffic in China is enhanced.

The present invention substantially improves the image quality of a photographic field in the range of depth of field of 4-30 meters by merely setting and adjusting the focal plane of the imaging lens, the relative positional relationship between the COMS sensor and the object plane (by changing the direction of the main axis of the camera lens barrel) and the shooting direction without any additional hardware cost, effectively solves the problem of perspective distortion of the photographic field, and effectively improves the imaging definition of objects near a horizon, further improving an auxiliary function of the rear-view camera apparatus for drivers, bringing about significant economic and social benefits as well as broad market prospects.

In another implementation, the camera system of the present invention is used for shooting the roads outside buildings, and the camera apparatus is installed at one or more corners of walls of the buildings, only one of which is exemplified herein. The camera apparatus is installed at a certain height, and shoots a road generally parallel to the building facing towards the outside of an outer wall of the building. The camera lens barrel of the camera apparatus is inclined downward at a first angle with respect to the horizontal direction. The imaging lens and the image acquisition unit are both oppositely inclined with respect to the main axis of the camera lens barrel, the imaging lens and the image acquisition unit incline, with respect to the main axis of the camera lens barrel, at the direction opposite to the inclination direction of the main axis of the camera lens barrel with respect to the horizontal direction, and the inclination angles are respectively a second angle and a third angle.

At the same time, the imaging lens is offset (translated) with respect to the main axis of the camera lens barrel, the offset direction is the direction away from the wall of the building, and the offset distance is substantially equal to tan8° to tan15° multiplied by a distance L between the imaging lens and the image acquisition unit; at the same time, both the imaging lens and the image acquisition unit are rotated with respect to the center line of their own substantially vertical direction, and the rotation direction is the direction away from the building wall.

While the principles of the present invention have been described in detail in connection with preferred embodiments thereof, it will be appreciated by a person skilled in the art that the above-described embodiments are merely illustrative of exemplary implementations of the present invention, and are not intended to limit the scope of the present invention. The details of the embodiments are not to be construed as limiting the scope of the present invention, and any obvious variations thereof, such as equivalent alterations, simple substitutions, and the like, may be made without departing from the spirit and scope of the present invention.

## Claims

1. A camera system for non-directly-facing shooting, wherein the camera system comprises a camera body, an image acquisition unit and an imaging lens, a front end of the camera body is a camera lens barrel, the imaging lens is installed in the camera lens barrel, the image acquisition unit is installed at the rear end of the camera body, and the camera lens barrel inclines towards a first direction, at a first angle *θ,* with respect to a reference direction, the imaging lens and the image acquisition unit incline towards a direction opposite to the inclination direction of the camera lens barrel, with respect to a main axis of the camera lens barrel, at a second angle *α* and a third angle *β* respectively.

2. The camera system according to claim 1, wherein the second angle *α* and the third angle *β* are different from each other.

3. The camera system according to claim 2, wherein the third angle *β* is greater than the second angle *α*, such that a plane where the image acquisition unit is located and a plane where the imaging lens is located intersect, on the side towards which direction the camera lens barrel inclines, to form one acute angle.

4. The camera system according to claim 2, wherein the imaging lens horizontally translates or offsets, with respect to the main axis of the camera lens barrel, in the second direction, or the image acquisition unit horizontally translates or offsets, with respect to the main axis of the camera lens barrel, in an opposite direction of the second direction, the second direction is perpendicular to the first direction and the main axis of the camera lens barrel and toward a shot object, and the image acquisition unit and the imaging lens deflect at an angle *γ* in the second direction.

5. The camera system according to claim 3, wherein the first angle *θ* is 6-14 degrees, the second angle *α* is 6-14 degrees, and the third angle *β* is 8-17 degrees.

6. The camera system according to any one of claims 1 to 3, wherein the camera system is a vehicle-mounted camera system to be installed in a target vehicle, the camera system is installed on side of the target vehicle, the first direction is a vertically downward direction, and the second direction is a direction away from body of the target vehicle.

7. The camera system according to claim 1, wherein the camera system comprises a plurality of sets of imaging structures composed of an image acquisition unit, an imaging lens and a camera body, which are respectively installed on two sides of a vehicle.

8. The camera system according to claim 1, wherein the camera system is installed higher than a target region to be shot.

9. The camera system according to claim 1, wherein an object focal point of the imaging lens is located at the rear of a side of the target vehicle, and a plane where the object focal point is located intersects with an intersection line, which is the intersection line of (1) a plane where the image acquisition unit is located and (2) a plane where the the imaging lens is located, to form an object focal plane S, where the third angle *β* and the second angle *α* satisfy a relationship of arctan (β-α) = f/(H-h), where H is a height of a center of imaging lens from the ground, f is a focal length of the imaging lens, and h is a preset height of the object focal plane S from the ground.

10. A structure configuration method for a camera system, the camera system comprising a camera body, an image acquisition unit and an imaging lens, wherein the method comprises:
respectively installing the imaging lens and the image acquisition unit at the front end and the rear end of the camera body, wherein the camera system is installed such that the camera body inclines, with respect to a reference direction, at a first angle *θ*; the imaging lens and the image acquisition unit are set to both incline, with respect to the main axis of the camera body, at a second angle *α* and a third angle *β* respectively in the direction opposite to the inclination direction of the camera body, the second angle *α* and the third angle *β* being different from each other.

11. The structure configuration method for the camera system according to claim 9, wherein the third angle *β* is larger than the second angle *α*, such that a plane where the image acquisition unit is located and a plane where the imaging lens is located intersect to form one acute angle.

12. The structure configuration method for a camera system according to claim 9, wherein the image acquisition unit horizontally offsets, with respect to a main axis of the camera body, in the second direction, the second direction is perpendicular to the first direction and the main axis of the camera body, the image acquisition unit and the imaging lens deflect at an angle toward the third direction, and the third direction is opposite to the second direction.

13. The structure configuration method for a camera system according to claim 9, wherein the first angle *θ* is 6-14 degrees, the second angle *α* is 6-14 degrees, and the third angle *β* is 8-17 degrees.
